# EUROPÄISCHE PATENTSCHRIFT

(11) **EP 2 042 378 B1**
(45) Veröffentlichungstag und Bekanntmachung des Hinweises auf die Patenterteilung: **23.03.2011**
(21) Anmeldenummer: 08016604.4
(22) Anmeldetag: 20.09.2008
(51) Int. Cl.: B60R 13/10

(54) **Rahmen für eine Kennzeichentafel-Halterung**
Frame for a registration plate holder
Cadre pour une fixation de plaque d'immatriculation

(30) Priorität: 27.09.2007 AT 15352007
(43) Veröffentlichungstag der Anmeldung: 01.04.2009
(73) Patentinhaber: Putz, Lisa-Maria, 4400 Steyr (AT)
(72) Erfinder: Putz, Lisa-Maria, 4400 Steyr (AT)
(74) Vertreter: Krause, Peter

(56) Entgegenhaltungen:
- EP-A- 0 519 288
- AT-B- 380 842
- AT-B- 409 840
- DE-A1- 4 336 906

## Beschreibung

Die Erfindung betrifft einen Rahmen für eine Kennzeichentafel-Halterung, die zur Befestigung der Kennzeichentafel an einem Kraftfahrzeug dient, wobei die Kennzeichentafel-Halterung aus einer die Unterseite der Kennzeichentafel abstützenden Unterlagsplatte besteht, die am Rand einen in Richtung der Kennzeichentafel gerichteten Steg aufweist und der Steg an mindestens einer Seite der Kennzeichentafel-Halterung mindestens eine, wenigstens einen Teil der Oberseite des Kennzeichentafelrandes umgreifende, Lasche aufweist und gegebenenfalls im Steg an der der Lasche gegenüberliegenden Seite der Kennzeichentafel-Halterung mindestens eine Durchbrechung für einen Schiebe-Haken-Verschluss vorgesehen ist.

Es sind verschiedene Vorrichtungen zur Befestigung von Tafeln, insbesondere Kennzeichentafeln, an einer Unterlage, vorzugsweise einem Kraftfahrzeug, bekannt.

So ist aus der AT 380 842 B eine derartige Vorrichtung zur Befestigung einer Kennzeichentafel an einem Kraftfahrzeug bekannt. Die Vorrichtung umfasst eine die Tafel abstützende Unterlagsplatte mit einem die Tafel umfassenden Rahmen. Der Rahmen ist mit der Unterlagsplatte entlang einer Rahmenseite schwenkbar, jedoch untrennbar und an einer dieser Rahmenseite gegenüberliegenden Rahmenseite lösbar verbunden.

Aus der AT 000 382 U1 ist es bekannt, dass eine Vorrichtung zur Befestigung einer Kennzeichentafel an einem Kraftfahrzeug aus einer Unterlagsplatte und aus einem mit dieser Unterlagsplatte um eine Schwenkachse schwenkbar verbundenen Rahmen besteht. Der Rahmen übergreift in seiner Schließstellung die Kennzeichentafel auf wenigstens einem Teil ihres Randes.

Ferner ist aus der AT 390 412 B eine Vorrichtung zur Befestigung einer Kennzeichentafel an einem Kraftfahrzeug bekannt, die eine die Kennzeichentafel abstützende Unterlagsplatte und eine die Kennzeichentafel umfassenden, zumindest die Vorderseite der Unterlagsplatte abdeckenden Rahmen aufweist. Die Unterlagsplatte ist mit dem Rahmen entlang einer Längsseite schwenkbar verbunden.

Nachteilig bei derart schwenkbaren Rahmen sind die aufwendigen Herstell- und Montageschritte für die Schwenklagerung. Ferner ist für die Schwenklagerung eine Lagerhaltung für viele Einzelteile notwendig.

Weiters ist aus der AT 409 840 B eine Halterung für eine Kennzeichentafel bekannt, die eine die Unterseite der Kennzeichentafel abstützende Unterlagsplatte und einen mit dieser Unterlagsplatte über einen Steg verbundenen Rahmen, der den Rand der Kennzeichentafel an der Oberseite übergreift, aufweist. An einer Seite der Halterung ist der Rahmen so ausgebildet, dass eine Öffnung zum Einführen der Tafel in den Zwischenraum zwischen der Unterlagsplatte und dem Rahmen möglich ist. Auch hier ist der Nachteil gegeben, dass die Fertigung dieser Vorrichtung äußerst aufwendig ist.

Eine weitere Halterung für eine an einem Kraftfahrzeug zu befestigende Kennzeichentafel ist aus der AT 004 940 U1 bekannt. Diese Halterung weist eine Leiste mit einer Vertiefung auf, welche mit Beschriftungen, Logos, Abbildungen o. dgl. versehen ist. Nachteilig dabei ist, dass wieder mehrere Montageschritte zur Komplettierung der Vorrichtung notwendig sind.

Ein genereller Nachteil aller obigen im Spritzgussverfahren hergestellten Vorrichtungen ist darin zu sehen, dass diese durch das Herstellverfahren hart und spröde sind, insbesondere bei mehrteiligen Ausführungen. Da viele Stoßstangen von Kraftfahrzeugen nicht plan bzw. gerade sind, ist eine entsprechende Lagerhaltung für die eventuellen Frontkrümmungen der Stoßstangen Bedingung für ein marktgerechtes Anbot.

Aufgabe der Erfindung ist es einen Rahmen der eingangs erwähnten Art zu schaffen, der einerseits die oben aufgezeigten Nachteile vermeidet und der anderseits stabil und formschön ist und dem Design des Kraftfahrzeuges entgegenkommt.

Die Aufgabe wird durch die Erfindung gelöst.

Die Erfindung ist **dadurch gekennzeichnet, dass** ein die Seitenflächen, gebildet aus den Seitenflächen der Unterlagsplatte und den anschließenden Stegflächen, und die der Unterlagsplatte abgewandten Stegflächen abdeckender, vorzugsweise einstückig, ausgebildeter, insbesondere aus Metall bzw. Edelstahl oder Kunststoff bestehender, Rahmen, der gegebenenfalls eine entsprechende Durchbrechung für den Schiebe-Haken-Verschluss aufweist, vorgesehen ist, der insbesondere über, vorzugsweise biegbare, Befestigungslaschen an der der Kennzeichentafel abgewandten Seite der Unterlagsplatte befestigbar ist und dass dieser Rahmen in einem Tiefziehverfahren, wobei vorzugsweise die Herstellung der abgewickelten Mantelfläche des Rahmens mittels Laser-Schneid- und/oder Stanztechnik erfolgt, hergestellt ist. Mit der Erfindung ist es erstmals möglich, den visuellen Eindruck einer Front- und Heckansicht eines Kraftfahrzeuges derart zu gestalten, dass ein einheitlicher optischer Effekt erzielt wird. Insbesondere in Hinblick darauf, dass die heute im Trend liegenden Kraftfahrzeuge immer mehr Karosserieteile, die zum Gesamt-Design beitragen, aus Chrom, Edelstahl oder anderen glanzpolierbaren Materialien aufweisen, ist ein Rahmen für die Kennzeichenhalterung als exklusiver Zusatz- oder Tuningteil zu sehen, der eben zum Gesamteindruck beizutragen hat. Bei montierten erfindungsgemäßen Rahmen sind keine Kunststoffteile der Kennzeichenhalterung zu sehen. Der Rahmen dient vorzugsweise zur Dekoration einer Kennzeichentafel-Halterung.

Der erfindungsgemäße Rahmen birgt auch den Vorteil in sich, dass ein Grossteil der bereits montierten Halterungen mit diesem Tuningteil nachgerüstet werden können.

Ein weiterer Vorteil des erfindungsgemäßen Rahmens ist darin zu sehen, dass er einstückig ausgeführt ist, so dass keine Teile unabsichtlich verlegt oder verloren werden können. Eine einfache Montage ist ebenfalls gewährleistet. Darüber hinaus wird mit dem Rahmen auch die gesetzliche Auflage erfüllt, dass das Kennzeichen an sich nicht durch Bohrungen oder dergleichen beschädigt werden muss.

Dies ist vor allem auch auf die in Österreich spezielle Möglichkeit eines Wechselkennzeichens zu sehen. Durch den Schiebe-Haken-Verschluss kann die Kennzeichentafel ohne Entfernung des Tuningteiles gewechselt werden. Eine einfache Montage ist gewährleistet.

Der gravierende Vorteil der Erfindung ist jedoch vor allem darin zu sehen, dass den in der EU eventuell in Kraft tretenden Richtlinien Rechnung getragen wird, gemäß denen die letzten wegstehenden Anbauteile einen Mindestradius von 2,5 mm aufweisen müssen und keine Verletzungsgefahr darstellen dürfen. Durch die Herstellung im Tiefziehverfahren ist gewährleistet, dass keine Fußgänger unabsichtlich beim Vorbeigehen Schaden in irgendeiner Art und Weise erleiden. Ferner kann es auch beim händischen Autowaschen durch scharfkantig weg stehende Teile zu keinen Verletzungen kommen. Die Erfindung dient also auch dem Schutz der Fußgänger sowie den Menschen, die am Äußeren des Autos hantieren, wie Mechaniker, Autopflegepersonal o. dgl.

Bei einer Ausführung des Rahmens aus Metall bzw. Edelstahl ist auch gewährleistet, dass eine Robustheit gegen Steinschlagschäden gegeben ist. Weiters sind optische Beeinträchtigungen durch Witterungseinflüsse praktisch auszuschließen. Auch Streusalzresistenz ist gegeben. Ein weiterer Vorteil ist darin zu sehen, dass die Bruchanfälligkeit durch Parkschäden stark minimiert wird.

Durch die bevorzugte erfindungsgemäße Herstellung, nämlich Laserzuschnitt und Tiefziehen, ist ein kostengünstiges, weil einfaches, Verfahren gewährleistet, so dass eine ausgezeichnete Wirtschaftlichkeit des Produktes erzielt werden kann, die am Markt für hohe Absatzzahlen sorgt.

Nach einer Ausgestaltung der Erfindung bilden die Stegflächen eine Umrandung der Kennzeichentafel. Dadurch wird die Kennzeichentafel quasi in die Unterlagsplatte eingebettet und der erfindungsgemäße Rahmen deckt in vorteilhafterweise diese Stege ab.

Gemäß einem besonderen Merkmal der Erfindung sind an den die Seitenflächen abdeckenden Teilen des Rahmens Einschnitte und/oder, vorzugsweise schmale, Ausschnitte vorgesehen. Dadurch ist es möglich den Rahmen an die eventuelle Biegung der Stoßstange des Kraftfahrzeuges anzupassen. Eine reduzierte Lagerhaltung mit nur einer Ausführung ist dadurch gegeben.

Nach einem weiteren Merkmal der Erfindung sind die Ecken und Kanten des Rahmens gerundet. Dadurch wird vorteilhafterweise die Verletzungsgefahr für anstreifende Fußgänger sowie den Menschen, die am Äußeren des Autos hantieren weitgehenst ausgeschaltet.

Nach einer besonderen Weiterbildung der Erfindung weisen die Rundungen des Rahmens einen Mindestradius von 2,5 mm auf. Dadurch wird die Verletzungsgefahr weitgehenst minimiert.

Gemäß einer besonderen Ausgestaltung der Erfindung ist der Rahmen elektro-poliert. Da der erfindungsgemäße Rahmen - wie bereits erwähnt - einen außerordentlichen optischen Effekt mit sich bringt, ist eine derartige Ausführung von großem Vorteil am Verkaufsmarkt.

Nach einer besonderen Weiterbildung der Erfindung ist der Rahmen, vorzugsweise zusätzlich, mit einem Kleber an der Unterlagsplatte bzw. am Steg der Unterlagsplatte befestigt. Da ja der Rahmen - auch bei Wechselkennzeichen - nach seiner Montage an der Unterlagsplatte nicht mehr demontiert werden muss, ist eine zusätzliche Befestigung sicher von großem Vorteil.

Die Erfindung wird im nachfolgenden anhand der in den Zeichnungen dargestellten Ausführungsbeispiele näher erläutert.

Es zeigen:
Fig. 1 eine Unterlagsplatte,
Fig. 2 einen Rahmen für die Unterlagsplatte,
Fig. 3 ein Detail A aus der Fig. 2 in Vergrößerung,
Fig. 4 das Detail A aus Fig. 2 in einer alternativen Ausführung zur Fig. 3 und
Fig. 5 ein Detail B aus der Fig. 2 in Vergrößerung.

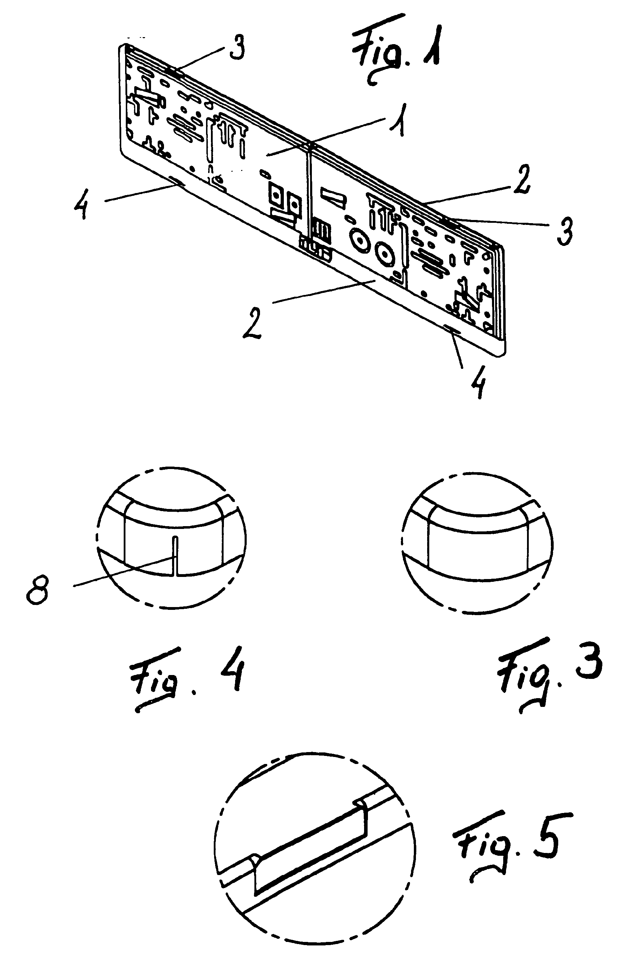

Gemäß der Fig. 1 dient zur Befestigung einer Kennzeichentafel an einem Kraftfahrzeug eine Kennzeichentafel-Halterung. Eine derartige Kennzeichentafel-Halterung besteht aus einer die Unterseite der - nicht dargestellten - Kennzeichentafel abstützenden Unterlagsplatte 1, die am Rand einen in Richtung der Kennzeichentafel gerichteten Steg 2 aufweist. Der Steg 2 weist an mindestens einer Seite der Kennzeichentafel-Halterung mindestens eine, wenigstens einen Teil der Oberseite des Kennzeichentafelrandes umgreifende, Lasche 3 auf. Im Steg 2 an der der Lasche 3 gegenüberliegenden Seite der Kennzeichentafel-Halterung ist mindestens eine Durchbrechung 4 für einen Schiebe-Haken-Verschluss vorgesehen.

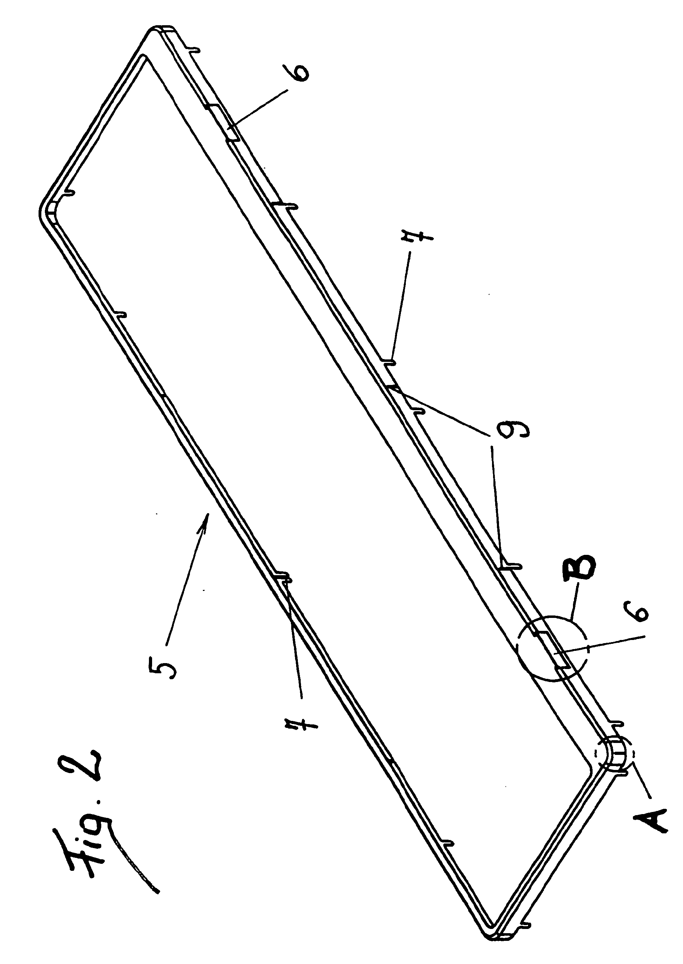

Gemäß der Fig. 2 ist ein Rahmen 5 gezeigt, der front- oder heckseitig des Kraftfahrzeuges die Unterlagsplatte 1 als, vorzugsweise elektro-polierter, Tuningteil abdeckt. Insbesondere deckt der Rahmen 5 die Seitenflächen, gebildet aus den Seitenflächen der Unterlagsplatte 1 und den anschließenden Stegflächen, und die der Unterlagsplatte 1 abgewandten Stegflächen ab. Die Stegflächen bilden eine Umrandung der Kennzeichentafel. Der Rahmen 5 ist vorzugsweise einstückig ausgebildet und besteht insbesondere aus Metall bzw. Edelstahl oder Kunststoff. Der Rahmen 5 weist auch eine entsprechende Durchbrechung 6 - siehe Detail in Fig. 5 - für einen Schiebe-Haken-Verschluss auf.

Der Rahmen 5 ist insbesondere über, vorzugsweise biegbare, Befestigungslaschen 7 an der der Kennzeichentafel abgewandten Seite der Unterlagsplatte 1 befestigbar.

An den die Seitenflächen abdeckenden Teilen des Rahmens 5 sind Einschnitte 9 und/oder, vorzugsweise schmale, Ausschnitte vorgesehen. Durch diese Einschnitte 9 ist die Möglichkeit gegeben, die Kennzeichentafel-Halterung an die Krümmung der Stoßstange anzupassen.

Dieser Rahmen 5 wird im Tiefziehverfahren hergestellt. Vorzugsweise erfolgt die Herstellung der abgewickelten Mantelfläche des Rahmens 5 mittels Laser-Schneid- und/oder Stanztechnik.

Eine abgerundete, im Tiefziehverfahren hergestellte, Ecke des Rahmens 5 ist in der Fig. 3 aufgezeigt. Dabei ist es von gravierender Bedeutung, dass den in der EU eventuell in Kraft tretenden Richtlinien Rechnung getragen wird. Gemäß diesen Richtlinien müssen die letzten wegstehenden Anbauteile einen Mindestradius von 2,5 mm aufweisen, so dass keine Verletzungsgefahr gegeben ist. Durch die Herstellung im Tiefziehverfahren ist gewährleistet, dass keine Fußgänger unabsichtlich beim Vorbeigehen Schaden in irgendeiner Art und Weise erleiden. Ebenso gibt es keine scharfkantig wegstehenden Teile, die Menschen verletzen könnten.

Wird die Mantelfläche des Rahmens 5 im Schneid- oder Stanzverfahren hergestellt, kann gemäß Fig. 4 ein Einschnitt 8 zur Fertigung notwendig sein. Bei einer Fertigung mit hoher Qualität stellt dieser Einschnitt in der montierten Gebrauchsversion keine Verletzungsgefahr dar. Es ist jedoch durchaus möglich, diesen Einschnitt durch Löten und anschließenden Polieren oder dergleichen in eine einheitliche Fläche mit dem Rahmenteil zu bringen.

Mit diesem Rahmen 5 ist es also möglich, neben dem technischen Effekt der Sicherheit für knapp vorbeigehende Passanten oder an der Karosserie hantierendes Personal, auch den visuellen Eindruck einer Front- und Heckansicht eines Kraftfahrzeuges trendmäßig zu gestalten, so dass ein optischer Effekt erzielt wird, der zum Gesamt-Design beiträgt. Der Rahmen 5 dient vorzugsweise zur Dekoration der Kennzeichentafel-Halterung.

## Patentansprüche

1. Rahmen (5) für eine Kennzeichentafel-Halterung, die zur Befestigung der Kennzeichentafel an einem Kraftfahrzeug dient, wobei die Kennzeichentafel-Halterung aus einer die Unterseite der Kennzeichentafel abstützenden Unterlagsplatte (1) besteht, die am Rand einen in Richtung der Kennzeichentafel gerichteten Steg (2) aufweist und der Steg (2) an mindestens einer Seite der Kennzeichentafel-Halterung mindestens eine, wenigstens einen Teil der Oberseite des Kennzeichentafelrandes umgreifende, Lasche (3) aufweist und gegebenenfalls im Steg (2) an der der Lasche (3) gegenüberliegenden Seite der Kennzeichentafel-Halterung mindestens eine Durchbrechung (6) für einen Schiebe-Haken-Verschluss vorgesehen ist, **dadurch gekennzeichnet, dass** ein die Seitenflächen, gebildet aus den Seitenflächen der Unterlagsplatte (1) und den anschließenden Stegflächen, und die der Unterlagsplatte (1) abgewandten Stegflächen abdeckender, vorzugsweise einstückig, ausgebildeter, insbesondere aus Metall bzw. Edelstahl oder Kunststoff bestehender, Rahmen (5), der gegebenenfalls eine entsprechende Durchbrechung (6) für den Schiebe-Haken-Verschluss aufweist, vorgesehen ist, der insbesondere über, vorzugsweise biegbare, Befestigungslaschen (7) an der der Kennzeichentafel abgewandten Seite der Unterlagsplatte (1) befestigbar ist und dass dieser Rahmen (5) in einem Tiefziehverfahren, wobei vorzugsweise die Herstellung der abgewickelten Mantelfläche des Rahmens (5) mittels Laser-Schneid- und/oder Stanztechnik erfolgt, hergestellt ist.

2. Rahmen nach Anspruch 1, **dadurch gekennzeichnet, dass** die Stegflächen eine Umrandung der Kennzeichentafel bilden.

3. Rahmen nach Anspruch 1 oder 2, **dadurch gekennzeichnet, dass** an den die Seitenflächen abdeckenden Teilen des Rahmens (5) Einschnitte (9) und/oder, vorzugsweise schmale, Ausschnitte vorgesehen sind.

4. Rahmen nach mindestens einem der vorhergehenden Ansprüche 1 bis 3, **dadurch gekennzeichnet, dass** die Ecken und Kanten des Rahmens (5) gerundet sind.

5. Rahmen nach Anspruch 4, **dadurch gekennzeichnet, dass** die Rundungen des Rahmens (5) einen Mindestradius von 2,5 mm aufweisen.

6. Rahmen nach mindestens einem der vorhergehenden Ansprüche 1 bis 5, **dadurch gekennzeichnet, dass** der Rahmen (5) elektro-poliert ist.

7. Rahmen nach mindestens einem der vorhergehenden Ansprüche 1 bis 6, **dadurch gekennzeichnet, dass** der Rahmen (5), vorzugsweise zusätzlich, mit einem Kleber an der Unterlagsplatte (1) bzw. am Steg (2) der Unterlagsplatte (1) befestigt ist.

## Claims

1. Frame (5) for a registration plate holder that serves for fastening the registration plate to a motor vehicle, whereby the registration plate holder consists of a base plate (1) supporting the underside of the registration plate, which comprises a web (2) pointing in the direction of the registration plate at the edge and the web (2) comprises at least one bracket (3) encompassing at least one part of the upper side of the registration plate edge on at least one side of the registration plate holder and, if necessary, at least one opening (6) is provided in the web (2) on the side of the registration plate holder opposite to the bracket (3) for a sliding clasp shutter, **characterised in that** a frame (5), preferably designed as a single part and made in particular of metal or stainless steel or plastic, which covers the sides formed by the side faces of the base plate (1) and the connecting web faces as well as the web faces facing away from the base plate (1) and which, if necessary, comprises a relevant opening (6) for the sliding clasp shutter, is provided, which can be fastened in particular to the side of the base plate (1) facing away from the registration plate through preferably flexible fastening brackets (7) and that this frame (5) is produced in a deep-drawing process, whereby the uncoiled surface area of the frame (5) is preferably produced by means of laser cutting and/or pressing technique.

2. Frame in accordance with claim 1, **characterised in that** the web faces form an edge around the registration plate.

3. Frame in accordance with claim 1 or 2, **characterised in that** incisions (9) and/or preferably narrow cut-out openings are provided on the parts of the frame (5) covering the sides.

4. Frame in accordance with at least one of the preceding claims 1 to 3, **characterised in that** the corners and edges of the frame (5) are rounded.

5. Frame in accordance with claim 4, **characterised in that** the roundings of the frame (5) comprise a minimum radius of 2.5 mm.

6. Frame in accordance with at least one of the preceding claims 1 to 5, **characterised in that** the frame (5) is electropolished.

7. Frame in accordance with at least one of the preceding claims 1 to 6, **characterised in that** the frame (5) is fastened, preferably additionally, to the base plate (1) and/or the web (2) of the base plate (1) using a glue.

## Revendications

1. Cadre (5) pour un support de plaque d'immatriculation servant à fixer ladite plaque à une automobile, ledit support de plaque d'immatriculation comprenant une plaque d'appui (1) soutenant la face inférieure de la plaque d'immatriculation, qui présente sur son bord une entretoise (2) dirigée vers la plaque d'immatriculation, et l'entretoise (2) présentant sur au moins une face du support de la plaque d'immatriculation au minimum une patte (3) entourant au moins une partie de la face supérieure du bord de la plaque d'immatriculation et où est prévue éventuellement dans l'entretoise (2) sur la face opposée à la patte (3) du support de la plaque d'immatriculation au moins une perforation (6) pour une fermeture à crochet coulissant, **caractérisé en ce qu'**un cadre (5) couvrant les faces latérales formées par les faces latérales de la plaque d'appui (1) et les faces adjacentes de l'entretoise, ainsi que par les surfaces de l'entretoise détournées de la plaque d'appui (1), formé de préférence d'une seule pièce, constituée notamment de métal, d'acier inoxydable ou de plastique, qui présente éventuellement une perforation (6) pour la fermeture à crochet coulissant, est prévu, qui peut être fixé par des pattes de fixation (7), de préférence flexibles, sur le côté de la plaque d'appui (1) détournée de la plaque d'immatriculation et **en ce que** ce cadre (5) est fabriqué selon un procédé d'emboutissage, la fabrication des surfaces latérales développées du cadre (5) étant de préférence assurée par coupage ou découpage par laser.

2. Cadre selon la revendication 1, **caractérisé en ce que** les surfaces de l'entretoise forment la bordure de la plaque d'immatriculation.

3. Cadre selon la revendication 1 ou 2, **caractérisé en ce que** que sur les parties du cadre (5) couvrant les faces latérales, des fentes (9) et/ou des encoches, de préférence étroites, sont prévues.

4. Cadre selon au moins une des revendications précédentes 1 à 3, **caractérisé en ce que** les coins et les arêtes du cadre (5) sont arrondis.

5. Cadre selon la revendication 4, **caractérisé en ce que** les arrondis du cadre (5) présentent un rayon minimum de 2,5 mm.

6. Cadre selon au moins une des revendications précédentes 1 à 5, **caractérisé en ce que** le cadre (5) est électropoli.

7. Cadre selon au moins une des revendications précédentes 1 à 6, **caractérisé en ce que** le cadre (5) est fixé, de préférence en supplément par une colle sur la plaque d'appui (1) ou sur l'entretoise (2) de ladite plaque d'appui.
